# EUROPEAN PATENT APPLICATION

(11) **EP 4 752 990 A1**
(43) Date of publication of application: **03.06.2026**
(21) Application number: 25172478.7
(22) Date of filing: 25.04.2025
(51) Int. Cl.: H01M 8/026, H01M 8/0265

(54) **SEPARATOR FOR FUEL CELLS**

(30) Priority: 29.11.2024 KR 20240174361
(71) Applicant: Hyundai Motor Company, Seoul 06797 (KR); Kia Corporation, Seoul 06797 (KR)
(72) Inventor: PARK, Ro Jun, 18280 Hwaseong-si, Gyeonggi-do (KR); SHIN, Woo Chul, 18280 Hwaseong-si, Gyeonggi-do (KR); SHIN, Sun Do, 18280 Hwaseong-si, Gyeonggi-do (KR)
(74) Representative: Isarpatent

(57) **Abstract**

A separator for fuel cells includes first channels that each include a first reduced region and a first enlarged region repeatedly located within a first general region. The first channels are configured to form a flow path of a reaction gas on a base plate. Second channels are arranged to be spaced apart from the first channels in parallel by a width-directional length of lands. The second channels include a second reduced region and a second enlarged region repeatedly located along the flow path within a second general region. The first enlarged region has the same shape as the second enlarged region. The first general region has the same cross-sectional area as the second general region. The first enlarged region and the second enlarged region each have a cross-sectional area corresponding to a cross-sectional area of the first general region.

## Description

### TECHNICAL FIELD

The present disclosure relates to a separator for fuel cells.

### BACKGROUND

In general, a fuel cell is a device that electrochemically converts the chemical energy of fuel directly into electrical energy within the fuel cell as opposed to converting the chemical energy into heat by combustion, and is a pollution-free power generation device that is being studied with interest as a power source for vehicles, a power source for laser electric devices, etc.

Hydrogen, which is a fuel gas, is supplied to the anode of the fuel cell and oxygen, which is an oxidizer, is supplied to the cathode of the fuel cell. In order to separate electrons from the hydrogen and oxygen and promote ionization, a humidifier is installed at each of the anode and the cathode of the fuel cell to supply moisture to the hydrogen and oxygen.

Fuel cells are classified into solid oxide fuel cells, molten carbonate fuel cells, polymer electrolyte membrane fuel cells, and direct methanol fuel cells depending on an operating temperature and the type of an electrolyte.

In a fuel cell, two electrochemical reactions, i.e., an oxidation reaction at an anode and a reduction reaction at a cathode, occur. In each of the two electrodes, a catalyst layer using platinum or platinum and ruthenium metal is formed to promote oxidation or reduction. Fine carbon particles are used as a catalyst support to reduce the amount of a platinum catalyst used and increase a utilization rate. The final byproducts of the reactions are electricity, heat, and water. The water generated at the cathode is in the form of water and water vapor, and is generally removed by strongly flowing a reducing gas (oxygen or air) toward the cathode.

The basic unit cell of a stack includes two electrodes, the anode and the cathode, separated by a polymer electrolyte membrane. The polymer electrolyte membrane and the anode and the cathode on the outer surface of the polymer electrolyte membrane form a membrane electrode assembly (MEA) by hot pressing. The MEA is supported by separators having a flow path formed thereon to supply hydrogen as fuel (methanol in the case of a direct methanol fuel cell) and oxygen or air as a reducing gas and to discharge water generated by oxidation-reduction reaction. Gaskets are provided to prevent gas or liquid supplied or discharged through the flow paths of the separators from leaking out. These units cells, which include the MEA, the separators, and the gaskets, are stacked in series to obtain required output. The stack is formed by fixing end plates as fixing units to both ends of the unit cells.

The separators serve to electrically connect the two electrodes while preventing the fuel (hydrogen or methanol) and the reducing gas (oxygen or air) from mixing in the fuel cell. The separators also perform a function as mechanical supports for the stacked unit cells and a function of allowing the fuel (hydrogen or methanol) and the reducing gas (oxygen or air) to uniformly flow to the electrodes through the flow paths formed on the separators to prevent the membrane from drying out through proper moisture management. When operating a polymer electrolyte fuel cell, it is important to supply sufficiently humidified fuel and reducing gas (oxygen or air).

In the case of high current operating conditions exceeding a critical current density, an excess of water generated by the electrochemical reactions and water moved from the anode by electroosmosis is present at the cathode. Some of the excess water evaporates into the reducing gas (oxygen or air) flowing in channels of the separators and saturates the reducing gas. Water that does not evaporate is present in a liquid state in gas diffusion layers (GDLs) or the channels of the separators.

Excess water present in the gas diffusion layers or the separator channels, if it is not discharged to the outside by an appropriate engineering mechanism, may cause flooding, thereby causing a fatal problem in terms of fuel cell performance or reliability.

The above information disclosed in this Background section is only for enhancement of understanding of the background of the disclosure and therefore it may contain information that does not form the prior art as defined by the patent statute.

### SUMMARY

Embodiments of the present disclosure relate to a separator for fuel cells in which, in a pulse-type orifice flow path structure in which the width-directional length of channels is repeatedly increased and decreased, the cross-sectional area of the channels is reduced in a section in which the width-directional length of the channels is increased. This structure can prevent a decrease in the flow velocity of a reaction gas.

The present disclosure describes subject matter that can address the above-described problems associated with prior art. Embodiments of the present disclosure provide a separator for fuel cells in which, in a pulse-type orifice flow path structure in which the width-directional length of channels is repeatedly increased and decreased in the flow direction of a reaction gas. The width-directional length of lands between adjacent channels remains the same, but the cross-sectional area of the channels is reduced in a section in which the width-directional length of the channels is increased. This structure can prevent a decrease in the flow velocity of the reaction gas and thus to improve water discharge performance from the lands and ensure voltage stability of fuel cells to stably generate voltage.

In one aspect, the present disclosure provides a separator for fuel cells including first channels configured to form a flow path of a reaction gas on a base plate and including a first reduced region and a first enlarged region repeatedly located along the flow path. Second channels are arranged to be spaced apart from the first channels in parallel by a width-directional length of lands and include a second enlarged region located to face the first reduced region and a second reduced region located to face the second enlarged region along the flow path. The first enlarged region is provided to have the same shape as the second enlarged region and is deformed to have a cross-sectional area corresponding to a cross-sectional area of a general region configured to form the flow path in the first channels.

In one embodiment, the first enlarged region may be formed to have a longer width-directional length than the general region and a shorter height-direction length than the general region.

In another embodiment, a ratio of a cross-sectional area of the enlarged region to a cross-sectional area of the general region is 1:1 to 1:1.3.

In still another embodiment, the first enlarged region may be formed to have a longer width-directional length than the general region and a smaller side wall inclination angle than the general region.

In still yet another embodiment, the first enlarged region may be formed to have a longer width-directional length than the general region and a stepped side wall compared to the general region.

In another further embodiment, the lands may be formed to have the same width-directional length along the flow path.

In still another further embodiment, the separator may further include an uppermost channel located at an uppermost part of the base plate. The uppermost channel may selectively include reduced regions located to face the first reduced region and the first enlarged region along the flow path.

In yet another further embodiment, the separator may further include a lowermost channel located at a lowermost part of the base plate. The lowermost channel may include the general region configured to form the flow path and selectively include an enlarged region located to face the second reduced region along the flow path.

It is understood that the embodiments can be combined with one another. Other aspects and embodiments of the disclosure are discussed infra.

The above and other features of the disclosure are discussed infra.

### BRIEF DESCRIPTION OF THE DRAWINGS

The above and other features of the present disclosure will now be described in detail with reference to certain exemplary embodiments thereof illustrated in the accompanying drawings which are given hereinbelow by way of illustration only, and thus are not limitative of the present disclosure, and wherein:
FIG. 1 is a view showing first channels and second channels of a separator for fuel cells according to a first embodiment of the present disclosure;
FIG. 2 is a cross-sectional view taken along line 2-2 of FIG. 1, showing a general region of the separator for fuel cells according to the first embodiment of the present disclosure;
FIG. 3 is a cross-sectional view taken along line 3-3 of FIG. 1, showing an enlarged region and a reduced region of the separator for fuel cells according to the first embodiment of the present disclosure;
FIG. 4 is a view showing first channels and second channels of a separator for fuel cells according to a second embodiment of the present disclosure;
FIG. 5 is a cross-sectional view taken along line 5-5 of FIG. 4, showing an enlarged region and a reduced region of the separator for fuel cells according to the second embodiment of the present disclosure;
FIG. 6 is a view showing first channels and second channels of a separator for fuel cells according to a third embodiment of the present disclosure;
FIG. 7 is a cross-sectional view taken along line 7-7 of FIG. 6, showing an enlarged region and a reduced region of the separator for fuel cells according to the third embodiment of the present disclosure;
FIG. 8 is a view showing an uppermost channel and a lowermost channel of the separator for fuel cells according to one embodiment of the present disclosure;
FIG. 9 is a view showing the uppermost channel of the separator for fuel cells according to one embodiment of the present disclosure;
FIG. 10 is a view showing the lowermost channel of the separator for fuel cells according to one embodiment of the present disclosure;
FIGs. 11A to 11C are views showing orifice flow paths of a conventional separator for fuel cells; and
FIGs. 12A to 12C are views showing pulse-type orifice flow paths of another conventional separator for fuel cells.

It should be understood that the appended drawings are not necessarily to scale, presenting a somewhat simplified representation of various preferred features illustrative of the basic principles of the disclosure. The specific design features of the present disclosure as disclosed herein, including, for example, specific dimensions, orientations, locations, and shapes will be determined in part by the particular intended application and use environment.

In the figures, reference numbers refer to the same or equivalent parts of the present disclosure throughout the several figures of the drawing.

### DETAILED DESCRIPTION OF ILLUSTRATIVE EMBODIMENTS

Hereinafter, exemplary embodiments of the present disclosure will be described in detail with reference to the accompanying drawings.

Advantages and features of the present disclosure and methods for achieving the same will become apparent from the descriptions of embodiments herein below with reference to the accompanying drawings.

However, the present disclosure is not limited to the embodiments disclosed herein but may be implemented in various different forms, and the embodiments are provided to make the description of the present disclosure thorough and to fully convey the scope of the present disclosure to those skilled in the art. It is to be noted that the scope of the present disclosure is defined only by the claims.

In addition, in the following description of the present disclosure, a detailed description of known functions and configurations incorporated herein will be omitted if it may make the subject matter of the present disclosure rather unclear.

The object of conventional separators for fuel cells is to uniformly distribute a reaction gas, such as hydrogen or air, and supply the reaction gas to a gas distribution layer G, and smoothly discharge water generated by reaction to the outside.

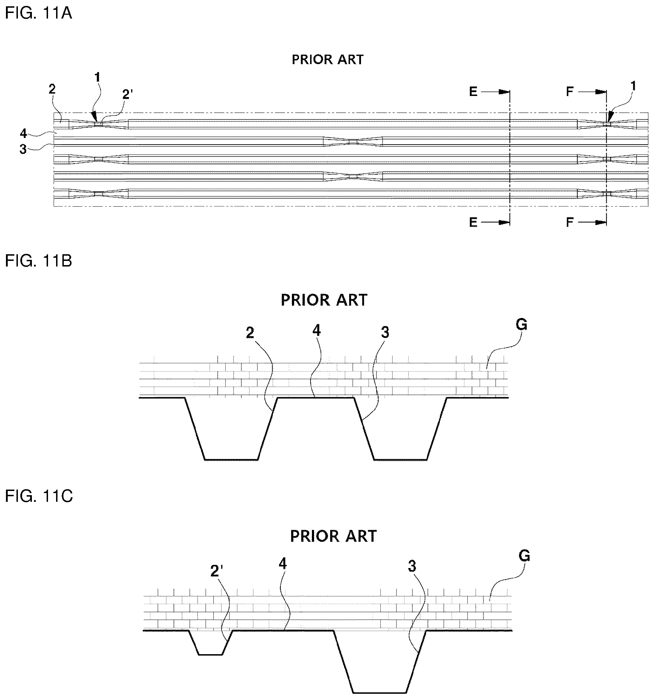

For this purpose, a conventional separator for fuel cells employs a plurality of orifice structures 1 along the flow path of the reaction gas, i.e., as shown in FIGs. 11A and 11B. The separator employs a structure in which the width-directional and height-directional lengths of one of adjacent channels 2 and 3 are decreased (with reference to 2' of FIG. 11C) so that the cross-sectional area thereof is narrower than that of the other channel 3. Thus, as the reaction gas moves from the channel 2' having the decreased cross-sectional area to the adjacent channel 3, water on lands 4 is removed through flow disturbance between the channels 2' and 3.

However, in the structure of the conventional separator for fuel cells, the flow of the reaction gas decreases and water may be accumulated on the lands 4 in contact with the gas diffusion layer G. This can occur because the porosity of a gas diffusion layer G decreases due to the characteristics of fuel cells, which shrinks and expands, as the operating time increases.

In addition, as described above, as the width-directional length of the channels 2' is decreased, the length of the lands 4 is relatively increased, and thus, a larger amount of water may be accumulated on the lands 4.

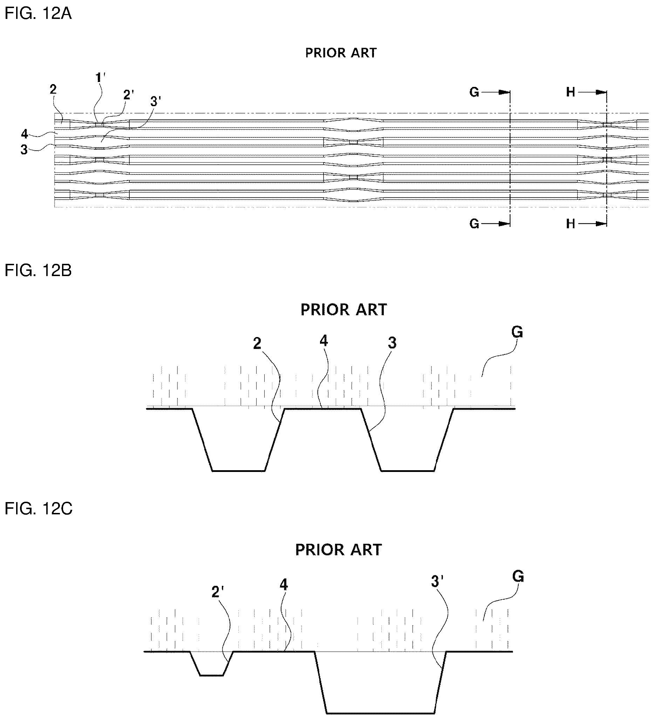

As shown in FIG. 12A, a structure having an increased width-directional length can be applied to a position facing an orifice structure 1. That is, a pulse-type orifice structure 1' in which the orifice structure 1 and a structure having an increased width-directional length are alternately located is applied to channels 2 and 3, thereby ensuring that the width-directional length of lands 4 is maintained constant along the flow path of the reaction gas.

That is to say, as shown in FIGs. 12B and 12C, in the case of adjacent channels 2 and 3, if the width-directional and height-directional lengths of one channel 2 are decreased, the width-directional length of the other channel 3 is increased, thereby ensuring that the length of the land 4 disposed between the deformed channels 2' and 3' is maintained constant.

However, in the above-described the pulse-type orifice structure 1' of the separator for fuel cells, although water accumulated on the lands 4 may be effectively removed, the flow velocity of the reaction gas may be decreased due to the increased width-directional length of the channel 3'. Thus, the fuel cell may not stably generate voltage and stability of the fuel cell may be reduced.

For this purpose, a separator for fuel cells according to one embodiment of the present disclosure applies the conventional pulse-type orifice structure 1' (see FIGs. 12A to 12C) to first channels 100 and second channels 200, and comprises enlarged regions 120 and 210 having a deformed shape, thereby effectively removing water accumulated on lands 300 and allowing a fuel cell to stably generate voltage.

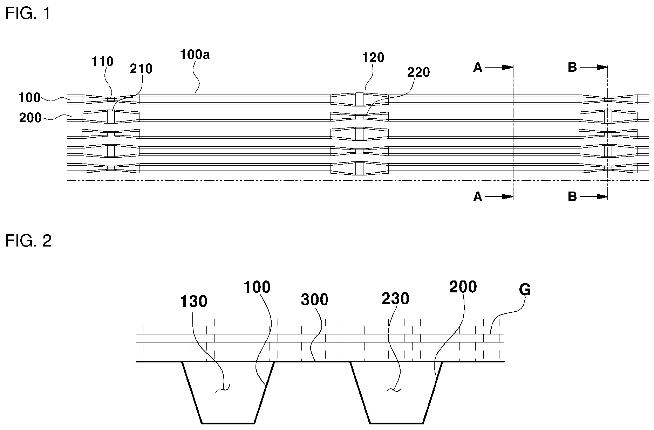

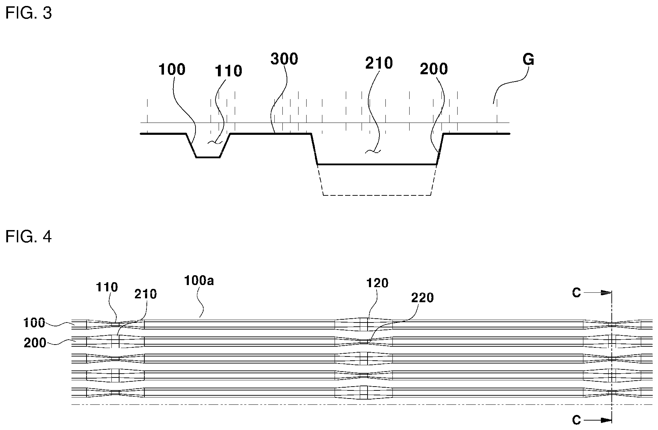

For example, FIG. 1 provides a view showing first channels and second channels of a separator for fuel cells according to a first embodiment of the present disclosure. FIG. 2 is a cross-sectional view taken along line 2-2 of FIG. 1, showing a general region of the separator for fuel cells according to the first embodiment of the present disclosure. FIG. 3 is a cross-sectional view taken along line 3-3 of FIG. 1, showing an enlarged region and a reduced region of the separator for fuel cells according to the first embodiment of the present disclosure.

Here, the first channels 100 forms the flow path of a reaction gas on a base plate 100a, and includes a first reduced region 110 and a first enlarged region 120 that are repeatedly located along the flow path.

In addition, the second channels 200 are arranged to be spaced apart from the first channels 100 in parallel by the width-directional length of the lands 300. These channels include a second enlarged region 210 located to face the first reduced region 110 along the flow path, and a second reduced region 220 located to face the first enlarged region 220.

That is, as shown in FIG. 2, general regions 130 and 230 of the first channel 100 and the second channel 200 have the same shape. But, as shown in FIG. 3, the first reduced region 110 and the second enlarged region 210 are formed to have different shapes. Similarly, the first enlarged region 120 and the second reduced region 220 are formed to have different shapes.

Particularly, the lands 300 are formed to have the same width-directional length along the flow path, as shown in FIGs. 2 and 3. To accomplish this, the first reduced region 110 is formed by decreasing the width-directional length of the general region 130 and the second enlarged region 210 is formed by increasing the width-directional length of the general region 230. In addition, the second enlarged region 210 is formed to have a relatively short height-directional length.

More particularly, as shown in FIG. 3, the second enlarged region 210 may be shaped to have a cross-sectional area corresponding to the cross-sectional area of the general region 230 of the second channel 200 that forms the flow path. For example, the lands 300 may be formed to a relatively long width-direction length compared to the general region 230 so as to have the same width-directional length along the flow path, and the second enlarged region 210 may be formed to have a relatively short height-directional length compared to the general region 230.

Here, the first enlarged region 120 and the second enlarged region 210 may be formed at a cross-sectional area ratio of 1:1 to 1:1.3 with respect to the general regions 130 and 230.

Accordingly, the first enlarged region 120 and the second enlarged region 210 are deformed to have a relatively short height-directional length compared to the conventional pulse-type orifice structure 1'. More specifically, the regions 120 and 210 are deformed into a short trapezoidal shape (see FIGs. 12A to 12C) to have a cross-sectional area corresponding to that of the general regions 130 and 230. This feature can allow the reaction gas to flow at a higher flow velocity than the conventional pulse-type orifice structure 1'.

In the case of the conventional pulse-type orifice structure 1', water discharge from the lands 3 may be facilitated, but because the width-directional length of the channels 1 and 2 is increased so that the width-directional length of the lands 3 is set to be constant, a decrease in the flow velocity of the reaction gas in the channels 1 and 2 occurs. In order to improve this problem, the first enlarged region 120 and the second enlarged region 210 are deformed to have a relatively short height-directional length, i.e., a reduced cross-sectional area, thereby being capable of preventing a decrease in the flow velocity of the reaction gas in the first enlarged region 120 and the second enlarged region 210 compared to the conventional pulse-type orifice structure 1'.

As such, preventing a decrease in the flow velocity of the reaction gas in the first channels 100 and the second channels 200 by decreasing the height-directional length of the first enlarged region 120 and the second enlarged region 210 corresponds to only one embodiment, and the same effect may be implemented through application of other embodiments.

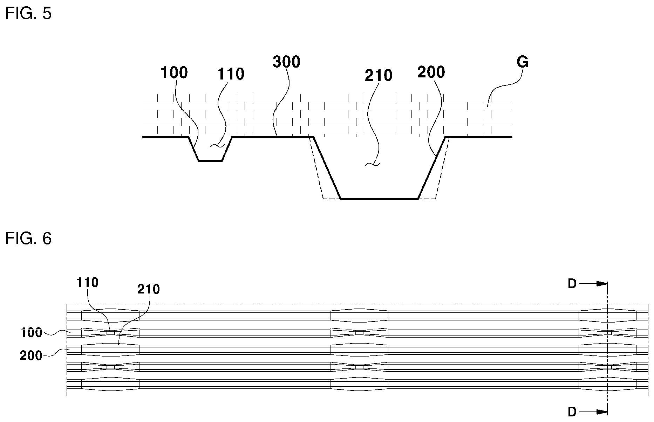

For example, FIG. 4 is a view showing first channels and second channels of a separator for fuel cells according to a second embodiment of the present disclosure, and FIG. 5 is a cross-sectional view taken along line 5-5 of FIG. 4, showing an enlarged region and a reduced region of the separator for fuel cells according to the second embodiment of the present disclosure.

As shown in FIGs. 4 and 5, the first enlarged region 120 and the second enlarged region 210 may be formed to have a relatively long width-directional length compared to the general regions 130 and 230, but may be formed to have a relatively small side wall inclination angle θ compared to the general regions 130 and 230 (see FIG. 5).

Here, the first enlarged region 120 and the second enlarged region 210 may be formed at a cross-sectional area ratio of 1:1 to 1:1.3 with respect to the general regions 130 and 230, in the same manner as in the above-described former embodiment.

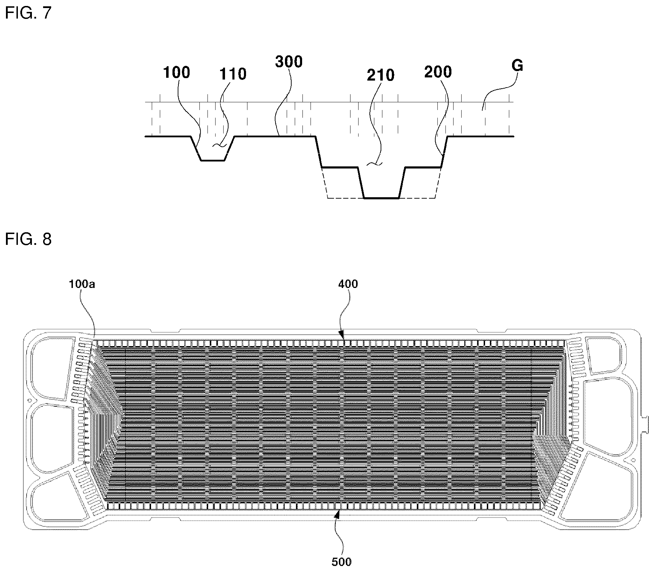

Another example is provided in FIGs. 6 and 7. FIG. 6 is a view showing first channels and second channels of a separator for fuel cells according to a third embodiment of the present disclosure, and FIG. 7 is a cross-sectional view taken along line D-D of FIG. 6, showing an enlarged region and a reduced region of the separator for fuel cells according to the third embodiment of the present disclosure.

As shown in FIGs. 6 and 7, the first enlarged region 120 and the second enlarged region 210 may be formed to have a relatively long width-directional length compared to the general regions 130 and 230, but may be formed to have a stepped side wall, i.e., with a stepped structure, compared to the general regions 130 and 230 (see FIG. 7).

Here, the first enlarged region 120 and the second enlarged region 210 may be formed at a cross-sectional area ratio of 1:1 to 1:1.3 with respect to the general regions 130 and 230, in the same manner as in the above-described former embodiment.

FIG. 8 is a view showing an uppermost channel and a lowermost channel of the separator for fuel cells according to embodiments of the present disclosure. As shown in FIG. 8, the separator according to one embodiment of the present disclosure may further include an uppermost channel 400 and a lowermost channel 500.

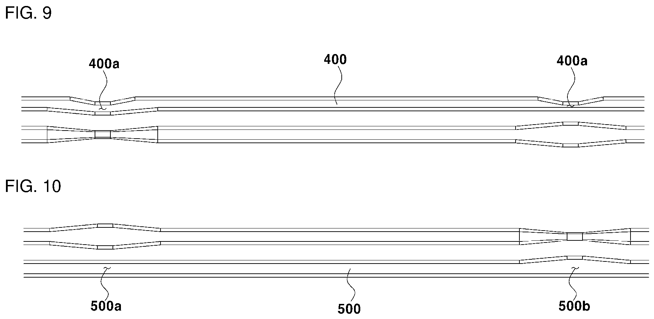

As shown in FIG. 9, the uppermost channel 400 is located at the uppermost part of the base plate 100a, and may selectively include reduced regions 400a located to face the first reduced region 110 and the first enlarged region 120 of the first channel 100 along the flow path.

Because no reaction occurs in the flow path of the uppermost channel 400, there is no need for the reaction gas to flow through the corresponding flow path
. Therefore, the flow path is repeatedly reduced through the selective arrangement of the reduced regions 400a to cause resistance. Thereby 500less reduction gas is supplied to the flow path of the uppermost channel 400.

In addition, as shown in FIG. 10, the lowermost channel 500 is located at the lowermost part of the base plate 100a, and may include a general region 500 that forms a flow path, and selectively include an enlarged region 500b located to face the second reduced region 220 of the second channel 200 along the flow path.

Because the lowermost channel 500 corresponds to a passage through which water generated by gravity moves, the lowermost channel 500 may form the flow path including only the general region 500a and the enlarged region 500b rather than a structure that has a reduced cross-sectional area to impede the flow of water to be discharged, thereby being capable of securing a flow path for effective water removal.

The present disclosure, in a pulse-type orifice flow path structure in which the width-directional length of channels is repeatedly increased or decreased in the flow direction of a reaction gas, enables the width-directional length of lands between adjacent channels to remain the same, but reduces the cross-sectional area of the channels in a section in which the width-directional length of the channels is increased so as to prevent a decrease in the flow velocity of the reaction gas. This configuration is capable of improving water discharge performance from the lands and ensuring voltage stability of fuel cells to stably generate voltage.

In addition, embodiments of the present disclosure may reduce the cross-sectional area of the channels at an optimal ratio to general regions of the channels through various methods, such as changing the slope or shape of the channels in the section in which the width-directional length of the channels is increased, thereby being capable of effectively preventing a decrease in the flow velocity of the reaction gas in the corresponding section.

As is apparent from the above description, the present disclosure, in a pulse-type orifice flow path structure in which the width-directional length of channels is repeatedly increased or decreased in the flow direction of a reaction gas, enables the width-directional length of lands between adjacent channels to remain the same, but reduces the cross-sectional area of the channels in a section in which the width-directional length of the channels is increased so as to prevent a decrease in the flow velocity of the reaction gas, thereby being capable of improving water discharge performance from the lands and ensuring voltage stability of fuel cells to stably generate voltage.

In addition, the present disclosure may reduce the cross-sectional area of the channels at an optimal ratio to general regions of the channels through various methods, such as changing the slope or shape of the channels in the section in which the width-directional length of the channels is increased, thereby being capable of effectively preventing a decrease in the flow velocity of the reaction gas in the corresponding section.

The disclosure has been described in detail with reference to embodiments thereof. However, it will be appreciated by those skilled in the art that changes may be made in these embodiments without departing from the principles and spirit of the disclosure, the scope of which is defined in the appended claims and their equivalents.

## Claims

1. A separator for a fuel cell comprising:
first channels comprising a first reduced region and a first enlarged region repeatedly located within a first general region, the first channels configured to form a flow path of a reaction gas on a base plate; and
second channels arranged to be spaced apart from the first channels in parallel by a width-directional length of lands, the second channels comprising a second reduced region and a second enlarged region repeatedly located along the flow path within a second general region;
wherein the second enlarged region is located adjacent the first reduced region and the second reduced region located adjacent the second enlarged region along the flow path,
wherein the first enlarged region has the same shape as the second enlarged region;
wherein the first general region has the same cross-sectional area as the second general region; and
wherein first enlarged region and the second enlarged region each have a cross-sectional area corresponding to a cross-sectional area of the first general region.

2. The separator of claim 1, wherein the first enlarged region has a longer width-directional length than the first general region and a shorter height-direction length than the first general region.

3. The separator of claim 1, wherein the first enlarged region has a longer width-directional length than the first general region and a smaller side wall inclination angle than the first general region.

4. The separator of claim 1, wherein the first enlarged region has a longer width-directional length than the first general region and a stepped side wall compared to the first general region.

5. The separator of claim 1, wherein the lands each have a constant width-directional length along the flow path.

6. The separator of claim 1, further comprising an uppermost channel located at an uppermost part of the base plate, wherein the uppermost channel comprises reduced regions located adjacent the first reduced region and the first enlarged region along the flow path.

7. The separator of claim 1, further comprising a lowermost channel located at a lowermost part of the base plate, wherein the lowermost channel comprises a lowermost general region configured to form the flow path, and comprises an enlarged region located adjacent the second reduced region along the flow path.

8. A separator for a fuel cell comprising:
a plurality of first channels, each first channel including a flow path of a reaction gas on a base plate, each flow path including a general region in which a reduced region and an enlarged region are formed; and
a plurality of second channels, each second channel parallel to and an adjacent first channel and spaced therefrom by a land, each second channel including a flow path that includes a general region in which a reduced region and an enlarged region are formed, wherein the enlarged region of each second channel is located adjacent the reduced region of the adjacent first channel and the reduced region of each second channel located adjacent the enlarged region of the adjacent first channel along the flow path;
wherein the general region of each first and second channel has a first cross-sectional area;
wherein the reduced region of each first and second channel has a second cross-sectional area;
wherein the enlarged region of each first and second channel has a third cross-sectional area that is greater than the second cross-sectional area; and
wherein a ratio of the third cross-sectional area to the first cross-sectional area is 1:1 to 1:1.3.

9. The separator of claim 8, wherein, for each first and second channel, the enlarged region has a longer width-directional length than the general region and a shorter height-direction length than the general region.

10. The separator of claim 8, wherein, for each first and second channel, the enlarged region has a longer width-directional length than the general region and a smaller side wall inclination angle than the general region.

11. The separator of claim 8, wherein, for each first and second channel, the enlarged region has a longer width-directional length than the general region and a stepped side wall compared to the general region.

12. The separator of claim 8, wherein for each second channel and adjacent first channel, the land has a constant width-directional length along the flow path.

13. The separator of claim 8, further comprising an uppermost channel located at an uppermost part of the base plate, wherein the uppermost channel comprises reduced regions located adjacent the reduced region and the enlarged region of an adjacent channel along the flow path.

14. The separator of claim 8, further comprising a lowermost channel located at a lowermost part of the base plate, wherein the lowermost channel comprises a lowermost general region configured to form the flow path, and comprises an enlarged region located adjacent the reduced region of an adjacent channel along the flow path.

15. A separator for a fuel cell comprising:
a plurality of first channels, each first channel including a flow path of a reaction gas on a base plate, each flow path including a general region in which a reduced region and an enlarged region are formed;
a plurality of second channels, each second channel parallel to and an adjacent first channel, each second channel including a flow path that includes aa general region in which a reduced region and an enlarged region are formed, wherein the enlarged region of each second channel is located adjacent the reduced region of the adjacent first channel and the reduced region of each second channel located adjacent the enlarged region of the adjacent first channel along the flow path; and
a plurality of lands, each land located between one of the second channels and the adjacent first channel, wherein each land has a constant width-directional length along the flow path.
